# EUROPÄISCHE PATENTSCHRIFT

(11) **EP 3 258 221 B1**
(45) Veröffentlichungstag und Bekanntmachung des Hinweises auf die Patenterteilung: **28.07.2021**
(21) Anmeldenummer: 16174255.6
(22) Anmeldetag: 13.06.2016
(51) Int. Cl.: G01D 11/30

(54) **SENSORANORDNUNG**
SENSOR ASSEMBLY
SYSTÈME DE DÉTECTION

(43) Veröffentlichungstag der Anmeldung: 20.12.2017
(73) Patentinhaber: Airbus Defence and Space GmbH, 82024 Taufkirchen (DE)
(72) Erfinder: HELWIG, Andreas, 80469 München (DE); FRIEDBERGER, Alois, 85667 Oberpframmern (DE); PARLEVLIET, Patricia, 81539 München (DE); FERRON, Fabien, 80937 München (DE)

(56) Entgegenhaltungen:
- EP-A1- 2 672 234
- WO-A1-2016/002321
- DE-B3-102006 027 421
- US-A1- 2014 182 393
- None

## Beschreibung

Die Erfindung betrifft eine Sensoranordnung zur Erfassung wenigstens eines Prozessparameters oder einer Zustandsgröße an einem Strukturelement, welches aus einer Matrix wenigstens eines faserverstärkten Kunststoffs ausgebildet ist, wobei die Sensoranordnung zumindest eine Sensorstruktur aufweist, die an einem Sensorträger angeordnet ist. Das Strukturelement kann dabei insbesondere ein Bauteil aus der Luft- und Raumfahrttechnik sein. Außerdem betrifft die Erfindung auch ein Verfahren zur Herstellung einer Sensoranordnung sowie deren Verwendung.

Die Herstellung und der Einsatz von faserverstärkten Kunststoffen ist anspruchsvoll und verlangt häufig die Gewinnung von Zustandsgrößen oder Prozessparametern der jeweiligen Prozesse, um diese gezielt beeinflussen zu können oder um das Auftreten kritischer Situation für die jeweilige Struktur zu vermeiden. Mit Blick auf die Sensorstruktur selbst und deren zur Verfügung stellen an einem Träger kennt man beispielsweise bereits aus der DE 10 2006 027 421 B3 einen Biegesensor an einem biegeelastischen Träger. Dabei ist es jedoch überdies wünschenswert, wenn die jeweilige Sensorstruktur einerseits an dem Strukturelement sicher verankert anzuordnen ist, zum anderen die Sensorstruktur eine räumlich definierte Positionierung erfährt, um zuverlässige Parameter gewinnen zu können, aus denen anschließend belastbare Aussagen ableitbar sind. Außerdem darf durch die Anordnung der Sensorstruktur die mechanische Stabilität der Matrix des Strukturelements nicht beeinträchtigt sein.

Es ist daher die Aufgabe der vorliegenden Erfindung, eine Sensoranordnung zur Applikation an einem Strukturelement zur Verfügung zu stellen, die eine sichere Anordnung der betreffenden Sensorstruktur gestattet und die die mechanische Stabilität des Strukturelements nicht einschränkt.

Diese Aufgabe wird gelöst durch eine Sensoranordnung der eingangs genannten Art mit den Merkmalen des Anspruchs 1, insbesondere also eine solche Sensoranordnung, bei der der Sensorträger aus einem thermoplastischen Kunststoff gebildet ist und bei der der Sensorträger bei Herstellung des Strukturelements mit dessen Matrix eine stoffschlüssige Fügeverbindung eingeht, wobei der Sensorträger zwischen Lagen des Kunststoffs des Strukturelements (1) in dessen Innerem und/oder an wenigstens einer von dessen Oberflächen angeordnet ist.

Die Erfindung besteht also darin, einen geeigneten thermoplastisch verformbaren Kunststoff zur Verfügung zu stellen, der bei der Herstellung der Matrix des Strukturelements mit diesem eine stoffschlüssige, dauerhafte Verbindung, bildet, was bevorzugt dadurch geschieht, dass der Sensorträger an der betreffenden Matrix anbindet. Dabei kann sich der Sensorträger beim Aushärteprozess an der Oberfläche des Strukturelements (bzw. zwischen Lagen desselben) anlösen, wodurch eine sehr gute Verbindung mit dem umgebenden Material eingegangen wird. Dies bedeutet insbesondere auch, dass es sich hierbei um einen Vorgang handelt, bei dem während des Prozess das eigentliche Material durch das Aushärten entsteht. Hierbei handelt es sich also um ein stoffschlüssiges, dauerhaftes Verbinden, bei welchem das Endmaterial gewissermaßen zugleich mit dem Strukturelement, also dem Bauteil selbst, erst entsteht.

Hierbei kann der Sensorträger durch den betreffenden Fügeprozess in das faserverstärkte Kunststoffbauteil (CFK-Bauteil), d.h. zwischen den CFK-Lagen, einlaminiert werden oder aber auf die Bauteiloberfläche durch einen Fügeprozess aufgebracht werden, so dass bei der erfindungsgemäßen Sensoranordnung der Sensorträger zweckmäßigerweise zwischen Lagen des Kunststoffs des Strukturelements in dessen Innerem und/oder an wenigstens einer von dessen Oberflächen angeordnet ist.

Bevorzugt bildet überdies bei einer Weiterbildung der erfindungsgemäßen Sensoranordnung der Sensorträger vor seiner Verarbeitung bzw. vor der Anbindung an die Matrix des Strukturelements ein flexibles Substrat, so dass eine einfache Anordnung des Sensorträgers in der jeweils gewünschten Position gelingt bzw. auch anspruchsvollere Geometrien von Strukturelementen damit hergestellt werden können.

In einer vorteilhaften Ausführung ist der Sensorträger der erfindungsgemäßen Sensoranordnung durch eine Folie gebildet, die ein Substrat mit hoher Flexibilität zur Anordnung von Sensorstrukturen bildet und die Etablierung sehr dünner Strukturen gestattet, so dass die Ausmaße des jeweiligen Strukturelements bei Anordnung eines oder mehrerer derartiger Sensorträger nur unwesentlich zunehmen.

Besonders bevorzugt kann der Sensorträger bei der erfindungsgemäßen Sensoranordnung aus Polyetherimid (PEI) gebildet sein, aus diesem Material kann ein geeignetes flexibles Substrat als Folie bereitgestellt werden, mit welcher vergleichsweise dünne Sensoren realisiert werden können, um diese mit der Folie anschließend in die Matrix des Strukturelements einzubetten und damit Temperatur oder andere Prozessparameter zu erfassen. Mit einem Sensorträger aus Polyetherimid kann bei Einbau zwischen den Lagen des faserverstärkten Kunststoffs aufgrund der brandhemmenden Eigenschaften auch der Brandschutz verbessert werden. Bei ähnlich vorteilhaften Eigenschaften sind auch andere Materialien für den Sensorträger vorstellbar, beispielsweise ein anderes Polykondensat wie Polyethersulfon (PES).

Liegt das Strukturelement in Konfiguration eines Harz/Faser-Systems vor, kann gegebenenfalls durch das Einlaminieren von Polyetherimid-Folien zwischen den Kunststofflagen eine Verbesserung der mechanischen Eigenschaften des Bauteils /Strukturelements durch Erhöhung der Schlagzähigkeit erreicht werden.

Polyetherimid als flexibles Substrat des Sensorträgers kann sich vorteilhaft sich beim Aushärteprozess an der Oberfläche anlösen, wodurch eine sehr gute Verbindung mit dem umgebenden Material eingegangen wird, dies kann zweckmäßigerweise auch bei der Verbindung von Thermoplast- mit Thermoset-Bauteilen Verwendung finden .

In vorteilhaften Weiterbildungen, die unterschiedlichen Anforderungen im Einsatz der erfindungsgemäßen Sensoranordnung gerecht werden können, kann die Sensorstruktur des Sensorträgers durch wenigstens eine Leiterbahn; wenigstens einen Elektronikbaustein, wenigstens einen rückgedünnten Chip oder eine anderweitige Sensorstruktur gebildet sein. Mit diesen Sensorstrukturen lassen sich etwa die Temperatur oder der Druck, aber auch andere Prozessparameter erfassen.

In einer anderen vorteilhaften Ausbildung der Sensoranordnung kann die Sensorstruktur mit einem zusätzlichen Schutz gegen äußerer Einflüsse versehen sein, der zudem die Umgebung gegenüber der Sensorstruktur elektrisch isolieren kann, wofür die an einer Oberfläche des Sensorträgers angeordnete Sensorstruktur auf einer dem Sensorträger abgewandten Seite mit einer Isolierschicht versehen ist.

Bei einer die Anbindung an die Matrix des Strukturelements stärkenden Variante der erfindungsgemäßen Sensoranordnung kann der Sensorträger eine Materialschwächung und/oder eine Perforation aufweist. Hierdurch wird die Anformung bzw. Durchdringung durch das Harz des Strukturelements ermöglicht, was wiederum die Anbindung an die Matrix des Strukturelements stärkt.

In geeigneter Weise lässt sich bei einer vorteilhaften Ausführung der Sensoranordnung die Fügeverbindung zwischen dem Strukturelement und dem Sensorträger durch einen Klebeprozess oder einen Schweißprozess herstellen, die gut beherrschbar sind und eine zu den verwendeten Materialien und zu erreichenden Formen eine optimale Vorbereitung auch hinsichtlich der einzusetzenden, miteinander zu verbindenden Halbzeuge gestattet. Durch den Klebeprozess können hierbei auch großflächige und dünnwandige Fügeteile lückenlos zusammengefügt werden, was hinsichtlich Druck- und Zugbelastung sowie der Kraftübertragung der Fügeteile eine relativ gleichmäßige Spannungsverteilung möglich macht.
Die Geometrie der Fügeteile wird nicht durch Bohrungen oder Kanten, wie sie für formschlüssige Fügeverfahren notwendig sind, verändert. Zudem ist dadurch auch eine Gewichtsersparnis möglich.

Wird die Fügeverbindung in einem Klebeprozess hergestellt, so können Strukturelement und Sensorträger vorteilhaft durch einen Co-bonding und/oder einen secondary bonding Prozess verbunden werden. Dies kann erfindungsgemäß insbesondere dann von Vorteil sein, wenn der Sensorträger auf ein bereits fertiges Bauteil aufgebracht werden soll und die stoffschlüssige Verbindung zwischen Strukturelement und Sensorträger durch einen Prozess erreicht wird, bei dem die Fügepartner durch eine hart-in nass-Verklebung (co bonding) unter Erwärmung oder eine hart/hart-Verklebung (secondary bonding) unter Zuhilfenahme eines Adhäsivmittels verbunden werden.

Die Aufgabe wird auch gelöst durch ein Verfahren zur Herstellung einer Sensoranordnung, insbesondere einer Sensoranordnung nach einem der vorhergehenden Ansprüche, mit einem Strukturelements aus einem faserverstärkten Kunststoff, in welches Strukturelement ein Sensorträger mit einer Sensorstruktur zur Erfassung wenigstens eines Prozessparameters oder einer Zustandsgröße an dem Strukturelement integriert ist, und bei welchem wenigstens die folgenden Verfahrensschritte ausgeführt werden:
- Bereitstellen einer oder mehrerer Lagen des faserverstärkten Kunststoffs;
- Anordnung wenigstens eines Sensorträgers aus einer Polyetherimid-Folie an der Oberfläche der wenigstens einen faserverstärkten Kunststofflage oder zwischen wenigstens zwei Lagen des faserverstärkten Kunststoffs;
- Ausbilden einer stoffschlüssigen Fügeverbindung zwischen dem Sensorträger und der wenigstens einen Lage des faserverstärkten Kunststoffs bzw. mehreren Lagen des faserverstärkten Kunststoffs des Strukturelement durch Aushärtung unter Druck und/oder Temperaturbeaufschlagung.

In gleichem Masse gilt dies für die Verwendung einer Sensoranordnung, die zur Erfassung wenigstens eines Prozessparameters oder einer Zustandsgröße an einem Strukturelement vorgesehen ist. Letzteres ist aus einer Matrix wenigstens eines faserverstärkten Kunststoffs ausgebildet, und die Sensoranordnung weist zumindest eine Sensorstruktur auf, die an einem Sensorträger angeordnet ist Der Sensorträger (20) ist erfindungsgemäß mit einer Polyetherimidfolie ausgebildet, die mit dem Strukturelement eine stoffschlüssige Fügeverbindung eingeht.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

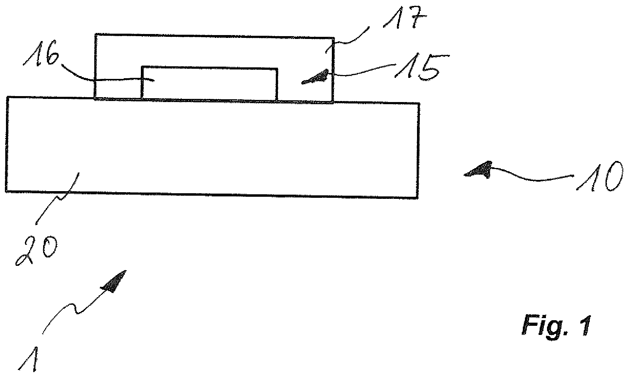

Die Erfindung wird nachstehend anhand von Ausführungsbeispielen in der Zeichnung näher erläutert. In stark schematisierter Darstellung zeigen hierbei die
- Fig.1: ein Ausführungsbeispiel einer Sensoranordnung mit Sensorträger, Sensorstruktur und Passivierung zur Anordnung beispielsweise zwischen Kunststofflagen eines Strukturelements.

Die einzige Zeichnungsfigur 1 zeigt eine im Ganzen mit 10 bezeichnete Sensoranordnung, die für eine in situ Erfassung von Prozessparametern an oder innerhalb von nicht im Detail dargestellten Strukturelementen 1 vorgesehen ist, wofür Leiterbahnen 16 als Sensorstrukturen 15 oder Teile von diesen auf als Thermoplastfolien ausgebildete Sensorträger 20 aufgebracht wurden. Zur Durchführung von Temperaturmessungen, also zur Bestimmung von Temperaturen als Zustandsgrößen können Sensorstrukturen 15 dabei als Widerstandsthermometer eingesetzt werden fortgeführt. Dieses wird zwischen den nicht weiter dargestellten faserverstärkten Kunststofflagen (CFK-Lagen) des Strukturelements 1 einlaminiert und soll beispielsweise während des Infiltrations- und Aushärtungsprozesses eine lokale Temperaturanalyse ermöglichen.

Beispielhaft beträgt in dem vorliegenden Ausführungsbeispiel die Breite der dargestellten Leiterbahn 16 als Messleitung oder Versorgungsleitung 30 µm. Zur präzisen Ermittlung der vorliegenden Temperatur benötigt man hierbei zwei Versorgungs- und zwei Messleitungen. Als Substratmaterial des Sensorträgers 20 wurden eine Thermoplastfolie aus Polyetherimid (PEI) verwendet.

Im ersten Fertigungsschritt werden nicht dargestellte Zuleitungen und Kontaktpads beispielsweise mittels eines Inkjetverfahrens gedruckt. Anschließend wird die Sensorstruktur 15 etwa mittels eines Aerosoljet-Verfahrens aufgebracht. Als abschließender Fertigungsschritt wird eine Isolierschicht 17 über die Leiterbahnen 16 der Sensorstruktur 15 aufgebracht, die die Sensorstruktur 15 gegenüber der leitfähigen Umgebung abschirmt. Für das Aufbringen der Isolierschicht 17, die sich, wie in der Fig.1 zu erkennen ist, im Wesentlichen auf der dem Sensorträger 20 abgewandten Seite der Sensorstruktur 15 befindet, wird beispielsweise die Siebdrucktechnik verwendet. Eine derartige Passivierung kann zum Beispiel erneut als eine Schicht aus PEI, aber auch als eine Polyimid-Schicht oder als ein Lötstopplack aufgebracht sein. Nach jedem Siebdruckprozess muss die aufgetragene Passivierungsschicht 17 ausgehärtet werden.

Die an den Sensorträgern 20 aufgebrachten Sensorstrukturen 15 werden zwischen den nicht dargestellten CFK Lagen eines Strukturelements 1 eingelegt, welches anschließend zur Herstellung der stoffschlüssigen Fügeverbindung zwischen Sensorträger 20 und Strukturelement 1 im Autoklaven infiltriert und ausgehärtet wird.

Die vorstehend beschriebene Erfindung betrifft demnach eine Sensoranordnung 10 zur Erfassung wenigstens eines Prozessparameters oder einer Zustandsgröße an einem Strukturelement 1. Das Strukturelement 1 ist aus einer Matrix wenigstens eines faserverstärkten Kunststoffs ausgebildet, wobei die Sensoranordnung 10 zumindest eine Sensorstruktur 15 aufweist, die an einem Sensorträger 20 angeordnet ist.

Um eine Sensoranordnung 10 zur Applikation an einem Strukturelement 1 zur Verfügung zu haben, die eine sichere Anordnung der betreffenden Sensorstruktur 15 gestattet und die die mechanische Stabilität des Strukturelements 1 nicht einschränkt, ist der Sensorträger 20 aus einem thermoplastischen, faserverstärkten Werkstoff gebildet und der Sensorträger 20 geht bei Herstellung des Strukturelements 1 mit dessen Matrix eine stoffschlüssige Fügeverbindung ein.

Obwohl die vorliegende Erfindung anhand eines bevorzugten Ausführungsbeispiels vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 1: Strukturelement
- 10: Sensoranordnung
- 15: Sensorstruktur
- 16: Leiterbahn
- 17: Isolierschicht
- 20: Sensorträger

## Patentansprüche

1. Sensoranordnung (10) zur Erfassung wenigstens eines Prozessparameters oder einer Zustandsgröße an einem Strukturelement (1), welches aus einer Matrix wenigstens eines faserverstärkten Kunststoffs ausgebildet ist, wobei die Sensoranordnung (10) zumindest eine Sensorstruktur (15) aufweist, die an einem Sensorträger (20) angeordnet ist, **dadurch gekennzeichnet, dass** der Sensorträger (20) aus einem thermoplastischen Kunststoff gebildet ist und dass der Sensorträger (20) bei Herstellung des Strukturelements (1) mit dessen Matrix eine stoffschlüssige Fügeverbindung eingeht, wobei der Sensorträger (20) zwischen Lagen des Kunststoffs des Strukturelements (1) in dessen Innerem und/oder an wenigstens einer von dessen Oberflächen angeordnet ist.

2. Sensoranordnung nach Anspruch 1 oder 2, **dadurch gekennzeichnet, dass** der Sensorträger (20) vor seiner Verarbeitung bzw. vor der Anbindung ein flexibles Substrat bildet.

3. Sensoranordnung nach einem der vorhergehenden Ansprüche, **dadurch gekennzeichnet, dass** der Sensorträger (20) durch eine Folie gebildet ist.

4. Sensoranordnung nach einem der vorhergehenden Ansprüche, **dadurch gekennzeichnet, dass** der Sensorträger (20) aus Polyetherimid (PEI) gebildet ist.

5. Sensoranordnung nach einem der vorhergehenden Ansprüche, **dadurch gekennzeichnet, dass** die Sensorstruktur (15) des Sensorträgers (20) durch wenigstens eine Leiterbahn (16) ; wenigstens einen Elektronikbaustein, wenigstens einen rückgedünnten Chip oder eine anderweitige Sensorstruktur gebildet ist.

6. Sensoranordnung nach einem der vorhergehenden Ansprüche, **dadurch gekennzeichnet, dass** die Sensorstruktur (15) an einer Oberfläche des Sensorträgers (20) angeordnet ist und auf einer dem Sensorträger abgewandten Seite mit einer Isolierschicht (17) versehen ist.

7. Sensoranordnung nach einem der vorhergehenden Ansprüche, **dadurch gekennzeichnet, dass** der Sensorträger (20) eine Materialschwächung und/oder eine Perforation aufweist, welche jeweils die Anbindung an die Matrix des Strukturelements (1) stärken.

8. Sensoranordnung nach einem der vorhergehenden Ansprüche, **dadurch gekennzeichnet, dass** die Fügeverbindung zwischen der Matrix des Strukturelements (1) und dem Sensorträger (20) durch einen Klebeprozess oder einen Schweißprozess hergestellt ist.

9. Sensoranordnung nach einem der vorhergehenden Ansprüche, **dadurch gekennzeichnet, dass** die Fügeverbindung in einem Klebeprozess herstellbar oder hergestellt ist, der einen Co-bonding- und/oder einen secondary bonding-Prozess beinhaltet.

10. Verfahren zur Herstellung einer Sensoranordnung (10), insbesondere einer Sensoranordnung (10) nach einem der vorhergehenden Ansprüche, mit einem Strukturelements (1) aus einem faserverstärkten Kunststoff, in welches Strukturelement (1) ein Sensorträger (20) mit eine Sensorstruktur (10) zur Erfassung wenigstens eines Prozessparameters oder einer Zustandsgröße an dem Strukturelement (1) integriert ist, **gekennzeichnet durch** wenigstens die folgenden Verfahrensschritte:
a. Bereitstellen einer oder mehrerer Lagen des faserverstärkten Kunststoffs;
b. Anordnung wenigstens eines Sensorträgers (20) aus einer Polyetherimid-Folie an der Oberfläche der wenigstens einen faserverstärkten Kunststofflage oder zwischen wenigstens zwei Lagen des faserverstärkten Kunststoffs;
c. Ausbilden einer stoffschlüssigen Fügeverbindung zwischen dem Sensorträger (20) und der wenigstens einen Lage des faserverstärkten Kunststoffs bzw. mehreren Lagen des faserverstärkten Kunststoffs des Strukturelements (1) durch Aushärtung unter Druck und/oder Temperaturbeaufschlagung.

11. Verwendung einer Sensoranordnung (10) zur Erfassung wenigstens eines Prozessparameters oder einer Zustandsgröße, wobei die Sensoranordnung an einem Strukturelement (1) vorgesehen ist, welches aus einer Matrix wenigstens eines faserverstärkten Kunststoffs ausgebildet ist, wobei die Sensoranordnung (10) zumindest eine Sensorstruktur (15) aufweist, die an einem Sensorträger (20) angeordnet ist, wobei der Sensorträger (20) mit einer Polyetherimidfolie ausgebildet ist, die mit dem Strukturelement (1) eine stoffschlüssige Fügeverbindung eingeht, wobei der Sensorträger (20) zwischen Lagen des Kunststoffs des Strukturelements (1) in dessen Innerem und/oder an wenigstens einer von dessen Oberflächen angeordnet ist.

## Claims

1. Sensor arrangement (10) for detecting at least one process parameter or a state variable on a structural element (1) which is formed from a matrix of at least one fiber-reinforced plastic, the sensor arrangement (10) having at least one sensor structure (15) which is arranged on a sensor carrier (20), **characterized in that** the sensor carrier (20) is formed from a thermoplastic, and **in that**, during the production of the structural element (1), the sensor carrier (20) forms an interlocking joint with the matrix thereof, the sensor carrier (20) being arranged between layers of the plastic of the structural element (1) in the interior thereof and/or on at least one of the surfaces thereof.

2. Sensor arrangement according to claim 1 or 2, **characterized in that** the sensor carrier (20) forms a flexible substrate before being processed or before being bonded.

3. Sensor arrangement according to one of the preceding claims, **characterized in that** the sensor carrier (20) is formed by a film.

4. Sensor arrangement according to one of the preceding claims, **characterized in that** the sensor carrier (20) is formed by polyetherimide (PEI).

5. Sensor arrangement according to one of the preceding claims, **characterized in that** the sensor structure (15) of the sensor carrier (20) is formed by at least one conductor track (16) ; at least one electronic component, at least one back-thinned chip or another sensor structure.

6. Sensor arrangement according to one of the preceding claims, **characterized in that** the sensor structure (15) is arranged on a surface of the sensor carrier (20) and is provided with an insulating layer (17) on a side facing away from the sensor carrier.

7. Sensor arrangement according to one of the preceding claims, **characterized in that** the sensor carrier (20) has a material weakening and/or a perforation, which in each case strengthen the connection to the matrix of the structural element (1).

8. Sensor arrangement according to one of the preceding claims, **characterized in that** the joint connection between the matrix of the structural element (1) and the sensor carrier (20) is produced by an adhesive process or a welding process.

9. Sensor arrangement according to one of the preceding claims, **characterized in that** the joining connection can be produced or is produced in a bonding process which includes a co-bonding and/or a secondary bonding process.

10. Method for producing a sensor arrangement (10), in particular a sensor arrangement (10) according to one of the preceding claims, having a structural element (1) made of a fiber-reinforced plastic, into which structural element (1) a sensor carrier (20) having a sensor structure (10) for detecting at least one process parameter or a state variable is integrated on the structural element (1), **characterized by** at least the following method steps:
a. Providing one or more layers of the fiber-reinforced plastic;
b. Arranging at least one sensor carrier (20) made of a polyethe-rimide film on the surface of the at least one fiber-reinforced plastic layer or between at least two layers of the fiber-reinforced plastic;
c. Formation of a materially bonded joint between the sensor carrier (20) and the at least one layer of the fiber-reinforced plastic or several layers of the fiber-reinforced plastic of the structural element (1) by curing under pressure and/or temperature.

11. Use of a sensor arrangement (10) for detecting at least one process parameter or a state variable, wherein the sensor arrangement is provided on a structural element (1) which is formed from a matrix of at least one fiber-reinforced plastic, wherein the sensor arrangement (10) has at least one sensor structure (15) which is arranged on a sensor support (20), the sensor support (20) being formed with a polyetherimide film which forms a material-locking joint connection with the structural element (1), the sensor support (20) being arranged between layers of the plastic of the structural element (1) inside the latter and/or on at least one of its surfaces.

## Revendications

1. Agencement de capteurs (10) pour la détection d'au moins un paramètre de processus ou d'une variable d'état sur un élément de construction (1) qui est formé d'une matrice d'au moins une matière plastique renforcée par des fibres, l'agencement de capteurs (10) présentant au moins une structure de capteur (15) qui est disposée sur un support de capteur (20), **caractérisé en ce que** la structure de capteur (15) est disposée sur un support de capteur (20). **en ce que** le support de capteur (20) est formé d'une matière thermoplastique, et **en ce que**, lors de la fabrication de l'élément de construction (1), le support de capteur (20) forme un assemblage par emboîtement avec la matrice de celui-ci, le support de capteur (20) étant disposé entre des couches de la matière plastique de l'élément de construction (1) à l'intérieur de celui-ci et/ou sur au moins une des surfaces de celui-ci.

2. Agencement de capteurs selon la revendication 1 ou 2, **caractérisé en ce que** le support de capteur (20) forme un substrat flexible avant d'être traité ou avant d'être collé.

3. Agencement de capteurs selon l'une quelconque des revendications précédentes, **caractérisé en ce que** le support de capteur (20) est formé par un film.

4. Agencement de capteurs selon l'une quelconque des revendications précédentes, **caractérisé en ce que** le support de capteur (20) est formé de polyétherimide (PEI).

5. Agencement de capteurs selon l'une des revendications précédentes, **caractérisé en ce que** la structure de capteur (15) du support de capteur (20) est formée par au moins une piste conductrice (16) ; au moins un composant électronique, au moins une puce à dos ou une autre structure de capteur.

6. Agencement de capteurs selon l'une des revendications précédentes, **caractérisé en ce que** la structure de capteur (15) est disposée sur une surface du support de capteur (20) et est pourvue d'une couche isolante (17) sur un côté opposé au support de capteur.

7. Agencement de capteurs selon l'une des revendications précédentes, **caractérisé en ce que** le support de capteur (20) présente un affaiblissement du matériau et/ou une perforation, qui renforcent chacun la liaison avec la matrice de l'élément de construction (1).

8. Agencement de capteurs selon l'une des revendications précédentes, **caractérisé en ce que** la liaison d'assemblage entre la matrice de l'élément structurel (1) et le support de capteur (20) est réalisée par un procédé de collage ou un procédé de soudage.

9. Agencement de capteurs selon l'une des revendications précédentes, **caractérisé en ce que** la liaison d'assemblage peut être réalisée ou est réalisée dans un procédé de collage qui comprend un procédé de co-collage et/ou un procédé de collage secondaire.

10. Procédé de fabrication d'un agencement de capteurs (10), notamment d'un agencement de capteurs (10) selon l'une des revendications précédentes, avec un élément structurel (1) en matière plastique renforcée par des fibres, dans lequel est intégré sur l'élément structurel (1) un support de capteur (20) avec une structure de capteur (10) pour la détection d'au moins un paramètre de processus ou d'une grandeur d'état, **caractérisé par** au moins les étapes de procédé suivantes :
a. Fournir une ou plusieurs couches de plastique renforcé de fibres ;
b. Mise en place d'au moins un support de capteur (20) constitué d'un film de polyéthylrimide sur la surface de l'au moins une couche de plastique renforcé par des fibres ou entre au moins deux couches de plastique renforcé par des fibres ;
c. Former une liaison matérielle entre le support de capteur (20) et l'au moins une couche de plastique renforcé par des fibres ou entre une pluralité de couches de plastique renforcé par des fibres de l'élément structurel (1) par durcissement sous pression et/ou température.

11. Utilisation d'un agencement de capteurs (10) pour la détection d'au moins un paramètre de processus ou d'une variable d'état, l'agencement de capteurs étant prévu sur un élément structurel (1) qui est formé d'une matrice d'au moins une matière plastique renforcée par des fibres, l'agencement de capteurs (10) présentant au moins une structure de capteurs (15) qui est disposé sur un support de capteur (20), le support de capteur (20) étant formé avec un film de polyétherimide qui forme une liaison intégrale avec l'élément de structure (1), le support de capteur (20) étant disposé entre des couches de la matière plastique de l'élément de structure (1) à l'intérieur de celui-ci et/ou sur au moins une de ses surfaces.
